Europäisches Patentamt

European Patent Office

Office européen des brevets

(19)

(11) Publication number: **0 215 992 B1**

# EUROPEAN PATENT SPECIFICATION

(12)

(45) Date of publication of patent specification: **27.02.91**  (51) Int. Cl.⁵: **G06F 9/26, G06F 12/06**

(21) Application number: **85430033.2**

(22) Date of filing: **24.09.85**

(54) **Method for storing the control code of a processor allowing effective code modification and addressing circuit therefor.**

(43) Date of publication of application:
**01.04.87 Bulletin 87/14**

(45) Publication of the grant of the patent:
**27.02.91 Bulletin 91/09**

(84) Designated Contracting States:
**DE FR GB IT**

(56) References cited:
**DE-A- 2 854 976**
**US-A- 3 959 783**
**US-A- 4 080 648**
**US-A- 4 308 590**

**IBM TECHNICAL DISCLOSURE BULLETIN, vol. 9, no. 9, February 1967, pages 1180-1181, New York, US; M. LEHMAN: "Variable memory structure"**

(73) Proprietor: **International Business Machines Corporation**
**Old Orchard Road**
**Armonk, N.Y. 10504(US)DE**

Proprietor: **Compagnie IBM FRANCE**
**5 Place Vendôme**
**F-75000 Paris 1er(FR)FR**

(72) Inventor: **Picon, Joaquin**
**575, av. Jean Aicard**
**F-06700 St Laurent du Var(FR)**
Inventor: **Poiraud, Clément Yvon Gustave**
**19, chemin du Malvan**
**F-06800 Cagnes sur Mer(FR)**
Inventor: **Sazbon-Nathansohn, Daniel**
**658, av. de la Grange Rimade**
**F-06270 Villeneuve Loubet(FR)**

(74) Representative: **Lattard, Nicole**
**Compagnie IBM France Département de Propriété Intellectuelle**
**F-06610 La Gaude(FR)**

## Description

### Technical Field

This invention relates to a method for patching the code contained in a read only memory and an addressing circuit therefor.

### Background art

A problem encountered in all processors working under control of a code or program built in a read only memory ROM is that the code, once stored, cannot be modified if a design problem or a malfunction occurs, so that no correction is possible.

A known solution to this problem consists in replacing the ROM module in error by a new module containing the corrected code. This solution is not acceptable for manufactured machines produced in high volumes and delivered to million of customers.

It is also not possible to have the code written in read/write memories RAM since this kind of memories have low densities and are more expensive than read only memories.

Using RAM memories as patch memories for the code to be replaced is already known. Such technique implies that the code designer provides in the code, branch instructions at selected places, to point on RAM locations where the corrected code is stored when an error is detected. To implement this solution, the programmer has to select the places where the branch instructions are needed, i.e. he must select the places where the likelihood that errors occur is high. The performance of the machines working under control of such a code is impaired, since branch instructions have to be executed even if there is no error.

Also, US patent 4,959,783 describes such a patching technique which makes use of a complex addressing circuit for replacing a sector of the read only memory by a sector of a read/write memory.

### Summary of the invention

Consequently, an object of the invention is to provide a method and a mechanism for storing the control code of the machine in such a way that the code may be corrected if an error is detected without impairing the processor performance.

Another object of the invention is to provide an addressing circuit for implementing said mechanism.

The method according to the invention consists in storing the code in a read only memory ROM and in a read/write memory RAM in the following way. Most part of the code is stored in the ROM memory and one instruction every n instructions is stored in the RAM memory. To do this the code is virtually divided in blocks containing n instructions and the first instruction of the block is stored in the RAM memory and the n-1 following instructions are stored in the ROM memory. When a malfunction occurs during the execution of at least one instruction of a so defined block, the corresponding corrected block is stored in the RAM. The instruction located in the RAM memory preceding the block in error is changed to a branch instruction pointing to the corrected code.

The k-bit addresses of the instructions are provided as usual on a code address bus. In case n is equal to a power of 2 , the k-x most significant bits (with $n = 2^X$) define the addresses of the instructions to be stored and executed from the RAM memory instead of the ROM memory. The addressing circuit is able of recognizing this address property in order to fetch the instructions which are stored in the RAM memory instead of the ROM memory at locations defined by the k-x most significant bits of the code address.

### Brief Description of the Figures

Figure 1 shows a processor wherein the method according to the present invention is implemented.

Figure 2 shows the addressing circuit allowing the method of the invention to be implemented.

### Detailed Description of the Invention

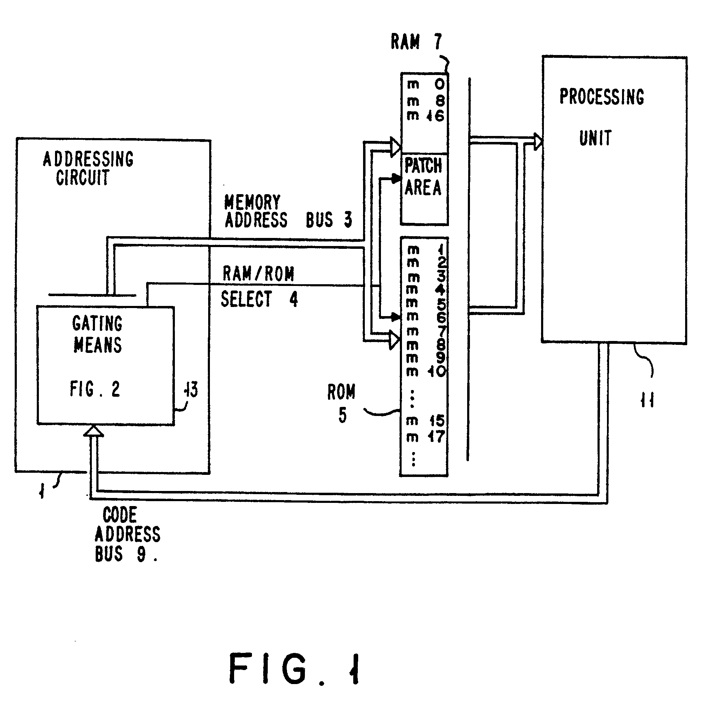

As shown in figure 1, the processor wherein the method of the invention is implemented, comprises an addressing circuit 1 which generates the memory address bits which are provided to the ROM memory 5 and to RAM memory 7 on bus 3 from the code address bits provided on the code address bus 9 from the processing unit 11.

The address bits from bus 9 are provided to gating means 13 which provides the memory address bits on bus 3 and a RAM/ROM memory selection signal on line 4, said memory address bits and said selection signal causing RAM memory 7 or ROM memory 5 to be accessed depending upon the value of the x least significant bits of the code address.

In a preferred embodiment of the invention x is chosen equal to 3, which means that one instruction every eight instructions is stored in the RAM and the three least significant bits of the address are tested. If they are equal to 0, the gating means provide a select signal on line 4 which is active for selecting the RAM memory and also provide on bus 3, the k-x most significant address bits of the code address to access the desired RAM location except when the patch area of the RAM memory is addressed due to the execution of a branch instruction to the patch area. If the least significant bits of the code address are not equal to 0, the gating means provide a select signal on line 4 which is active for selecting the ROM memory and the k code address bits are provided to bus 3 to access the desired ROM location.

As schematically shown in figure 1, ROM memory 5 contains instructions m1, m2...m7; m9....m15; m17... etc and RAM memory 7 contains instructions m0, m8, m16 etc...Thus the code is run in the following way: first instruction m0 from RAM 7, then seven instructions m1 to m7 from ROM 5, then instruction m8 from RAM 7 etc....

RAM memory 7 has a code area which contains instructions as above defined and a patch area used for patching the blocks containing errors. When such a block is found, the corrected block including the instruction normally stored in the RAM memory, is stored in the patch area at an address which is found in the RAM location normally containing the first instruction of the block. This means that the content of this location is changed to a branch address value. Thus, when this RAM memory location is addressed, a branch to the patch area occurs and the corrected instruction block is run instead of the ROM block containing the error.

At the end of the corrected block stored in the RAM patch area, a branch instruction is stored so as to come back to the normal code running.

The branch address has a specific configuration. This insures that when the corrected code is run in RAM memory, no shifting of the code address on bus 9 occurs till the branch instruction at the end of the corrected block is executed, so that during the time that the patch area is accessed, the select signal on line 4 is active to select the RAM and the memory address bits on bus 3 are identical to the code address bits on bus 9.

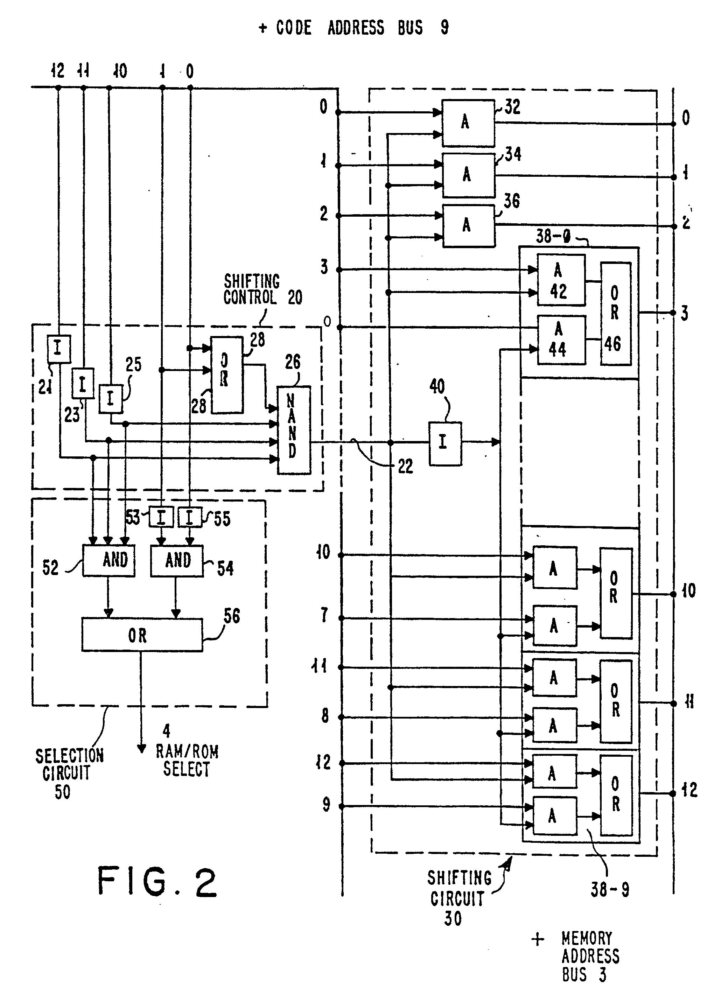

Figure 2 shows an addressing circuit which generates the memory address bits on bus 3 and the RAM/ROM select signal on line 4 in the specific case where k is chosen equal to 13 and x is equal to 3. The man skilled in the art will be able to modify this circuit in case k and x have different values.

Shifting control circuit 20 generates on its output line 22 a shifting control signal which is active to cause the code address bits on bus 9 to be shifted towards the least significant bits when the instructions in the code area of the RAM are accessed. The shifting control signal on output line 22 has to be inactive when the patch area of the RAM is accessed i.e. when the RAM address is provided through the decoding of the branch instruction read from the RAM code area to point on the corrected block in the patch area.

Shifting control circuit 20 comprises NAND gate 26 which receives on three of its inputs, the three least significant bits 12, 11, 10 inverted by means of inverters 21, 23, 25 of the code address from bus 9 and on its fourth input an inhibit signal which is only active (level 0) when the patch area of RAM 7 is addressed (bits 0 and 1 = 0). Thus when the three least significant bits of the code address are at 0 and when the patch area is not addressed the output signal of line 22 is active at level 0 so as to cause the address bits on bus 9 to be shifted in shifting circuit 30, as will be described later on.

When a patch is implemented into the RAM, the content of code RAM location preceding the block in error is changed to a branch instruction pointing on a patch area location.

Since the patch area addresses may have their three least significant bits at 0 at a moment, the shifting control signal on line 22 has to be inactive (level 1) at that time. Thus, in a specific embodiment of the invention where the RAM addresses have their two most significant bits always at 0 and the ROM addresses have always at least one of the two most significant bits at 1, when the two most significant bits of the code address on bus 9 are at 0, which means that a branch instruction to the patch area is to be executed, the shifting control signal is made inactive (level 1) even if bits 12, 11 and 10 are at 0. Most significant bits 0 and 1 of the code address on bus 9 are provided to OR circuit 28. Thus when these bits are equal to 0, OR circuit 28 which has its output connected to the inhibit input of NAND gate 26 prevents the shifting control signal on line 22 from being active.

Circuit 30 comprises AND gates 32, 34, 36, logic circuit 38-0 to 38-9 and inverter 40.

The first inputs of AND gates 32, 34 and 36 receive bits 0, 1 and 2 respectively, from code address bus 9. Output line 22 of NAND gate 26 is connected to the second inputs of these AND gates 32, 34 and 36 so that, when the shifting control signal is active at level 0, these AND gates provide 0 output signals which are bits 0, 1, 2 of memory address bits on bus 3.

If shifting control signal on line 22 is inactive i.e. at level 1, AND gates provide bits 0, 1, 2 of the code address on bus 9 as bits 0, 1, 2 of the memory address on bus 3.

Each one of circuit 38-0 to 38-9 receives two bits of the code address on bus 9 so as to provide on their outputs one or the other of said bits depending whether the shifting control signal on line 22 is active or not. For example circuit 38-0 receives bits 3 and 0 from code address bus 9 and provides on its output bit 3 when shifting control signal is inactive (no shift) and bit 0 when shifting control signal is active. This causes the code address bits on bus 9 to be shifted towards the least significant bits on memory address bus 3 when the shift control signal is active.

Logic circuit 38-0 to 38-9 comprises two AND gates 42 and 44 and OR gate 46. For example in circuit 38-0, AND gate 42 receives bit 3 of the code address on bus 9 and the shifting control signal and AND gate 44 receives bit 0 of the code address from bus 9 and the shifting control signal inverted in inverter 40. OR gate 46 is connected to the outputs of AND gates 42 and 44. Thus when the shifting control signal is active (level 0), the output of AND gate 42 is at a 0 level and AND gate 44 provides bit 0 of the code address to OR circuit 46. Thus bit 3 of memory address on bus 3 is equal to bit 0 of the code address.

When the shifting control signal is inactive, AND gate 44 provides a 0 output signal and AND gate 42 provides bit 3 of the code address to OR circuit 46. Thus bit 3 of memory address on bus 3 is equal to bit 3 of the code address.

Selection circuit 50 provides the RAM/ROM select signal on its output line 4. For example this signal is at level 1 when the RAM is to be selected and at level 0 when the ROM is to be selected.

It comprises two AND gates 52 and 54 and OR gate 56. The inputs of AND gate 52 receive the inverse of bits 12, 11 and 10 of the code address from bus 9 so as to provide an output signal at 1 when these bits are at 0, which means that the RAM is to be addressed. The inputs of NAND gate 54 receive bits 0 and 1 of code address from bus 9 inverted by means of inverters 53 and 55 so as to provide an output signal at 1 when these bits are at 0 which means that the patch area of RAM memory 7 is to be addressed.

The outputs of AND gates 52, 54 are provided to OR gate 56 which thus generates on its output 4 the RAM/ROM select signal.

## Claims

1. Method for storing the control code of a processor in memory means comprising a read only memory ROM (5) and a read/write memory RAM (7) characterized in that said method consists in:

   virtually dividing the control code in blocks of n successive instructions comprising a first instruction and (n-1) following instructions, n being equal to any determined integer number higher than 2, storing the first instruction of each block into the read/write memory storing the (n-1) following instructions of each block in the read only memory ROM,

   when an error is detected in one or more blocks, replacing the first instruction of each of said blocks normally stored in the read/write memory RAM, by a branch instruction containing a branch address value pointing to a patch area in the read/write memory RAM where the corrected block is stored.

2. Method according to claim 1 characterized in that n is equal to a power of 2.

3. A patching mechanism in a processor system including memory means comprising a read only memory ROM (5) for storing the instructions of the processor control code, said system generating k-bit memory addresses to address the instructions stored in the memory means on an address bus (9) where k is an integer number, said patching mechanism being characterized in that it comprises:

   a read/write memory RAM (7) for storing every nth instruction of the control code, where n is equal to any determined integer number higher than two, in such a way that the control code is virtually divided into blocks comprising a first instruction stored in the read/write memory RAM and (n-1) following instructions, said following instructions being stored in the read only memory ROM (5),

   patch areas provided into the read/write memory RAM, so that when an error is detected in one or more blocks the processor system causes the first instruction of each of said blocks normally stored in the read/write RAM to be replaced by a branch instruction containing a branch address value pointing to a patch area where the system causes the corrected block to be stored,

   an addressing circuit (1) responsive to the k-bit addresses generating a memory select signal therefrom to provide the k-bit address to the read only memory if the k-bit address corresponds to the address of one instruction among the (n-1) instructions of a block or to the read/write memory, if the k-bit address corresponds to the address of the first instruction of a block or to any address in a patch area.

4. Patching mechanism according to claim 3, characterized in that n is equal to a power x of two, that is $n = 2^x$.

5. Patching mechanism according to claim 4, characterized in that the addressing circuit comprises:

gating means (13) responsive to the k-bit address and generating therefrom the memory select signal to cause either the read only memory or the read/write memory to be addressed, and also generating read/write memory or read only memory address bits which are identical to the k-bits of the k-bit address, when the memory select signal is active to address the read only memory or when the address lies in a patch area and which are identical to the (k-x) most significant bits of the k-bit address, when the memory select signal is active to address the read/write memory.

6. Patching mechanism according to claim 5, characterized in that the gating means comprises:

selection means (50) responsive to at least the x least significant bits of the k-bit address to generate the read only memory selection signal when these x bits indicate that one instruction among the n-1 instruction of a block is to be addressed and the read/write memory selection signal when these bits indicate that the first instruction of a block is to be addressed or when a patching area is to be addressed,

shifting control means (20) which generates a shifting control signal which is active when the x least significant bits of the k-bit address are equal to 0 except when the patch area of the read/write memory is addressed,

shifting means (30) receiving the k-bit address and generating the memory address bits therefrom, said memory address bits being identical to the k-bits address when the shifting control signal is inactive and being equal to the k-x most significant bits of the k-bit address when the shifting control signal is active.

7. Patching mechanism according to claim 6, characterized in that the shifting means comprises:

means (32, 34, 36) responsive to the shifting control signal for setting the x most significant bits of the memory address to 0 when the shifting control signal is active.

8. Patching mechanism according to claim 4 or 5 characterized in that the selection means are responsive to the three least significant bits of the code address and to at least one of the most significant bits of the code address for generating the RAM/ROM selection signals.

**Revendications**

1. Méthode pour emmagasiner le code de commande d'un processeur dans des moyens de mémoire comprenant une mémoire morte ROM (5) et une mémoire vive RAM (7), caractérisée en ce que ladite méthode consiste à :

diviser de façon virtuelle le code de commande en blocs de n instructions successives, comprenant une première instruction et (n-1) instructions suivantes, n étant égal à tout nombre entier déterminé supérieur à 2,

stocker la première instruction de chaque bloc dans la mémoire vive,

stocker les (n-1) instructions suivantes de chaque bloc dans la mémoire morte ROM,

lorsqu'une erreur est détectée dans un ou plusieurs blocs, remplacer la première instruction de chacun desdits blocs, normalement stockée dans la mémoire vive RAM, par une instruction de branchement contenant une valeur d'adresse de branchement pointant à une zone de correction dans la mémoire vive RAM où est stocké le bloc corrigé.

2. Méthode suivant la revendication 1, caractérisée en ce que n est égal à une puissance de 2.

3. Mécanisme de correction dans un système de processeur comportant des moyens de mémoire qui comprennent une mémoire morte ROM (5) pour stocker les instructions du code de commande du processeur, ledit système générant des adresses de mémoire à k bits pour l'adressage des instructions stockées dans les moyens de mémoire, sur un bus d'adresse (9), k étant un nombre entier, ledit mécanisme de correction étant caractérisé en ce qu'il comprend :

une mémoire vive RAM (7) pour emmagasiner chaque nième instruction du code de commande, n étant égal à tout nombre entier déterminé supérieur à 2, d'une manière telle que le code de commande est divisé virtuellement en blocs comprenant une première instruction scockée dans la mémoire vive RAM et (n-1) instructions suivantes, lesdites instructions suivantes étant stockées dans la mémoire morte ROM (5),

des zones de correction prévues dans la mémoire vive RAM de sorte que,lorsqu'une erreur est détectée dans un ou plusieurs blocs, le système de processeur provoque le remplacement de la première instruction de chacun des dits blocs, normalement stockée dans la RAM , par une instruction de branchement contenant une valeur d'adresse de branchement qui pointe à une zone de correction où le système provoque le stockage du bloc corrigé, et

un circuit d'adressage (1) qui répond aux adresses de k bits et génère un signal de sélection de mémoire à partir de celles-ci,de manière à fournir l'adresse de k bits à la mémoire morte si l'adresse de k bits correspond à l'adresse d'une instruction parmi les (n-1) instructions d'un bloc, ou à la mémoire vive si l'adresse de k bits correspond à l'adresse de la première instruction d'un bloc ou à une adresse quelconque dans une zone de correction.

4. Mécanisme de correction suivant la revendication 3, caractérisé en ce que n est égal à une puissance x de 2, c'est-à-dire $n = 2^x$.

5. Mécanisme de correction suivant la revendication 4, caractérisé en ce que le circuit d'adressage comprend :

des moyens d'aiguillage (13) qui répondent à l'adresse de k bits et génèrent, à partir de celle-ci, le signal de sélection de mémoire de façon à provoquer l'adressage de la mémoire morte ou de la mémoire vive, et qui génèrent également des bits d'adresse de mémoire vive ou de mémoire morte qui sont identiques aux k bits de l'adresse de k bits, lorsque le signal de sélection de mémoire est actif pour adresser la mémoire morte ou lorsque l'adresse se trouve dans une zone de correction, et qui sont identiques aux (k-x) bits de poids fort de l'adresse de k bits lorsque le signal de sélection de mémoire est actif pour adresser la mémoire vive.

6. Mécanisme de correction suivant la revendication 5, caractérisé en ce que les moyens d'aiguillage comprennent :

des moyens de sélection (50) qui répondent à au moins les x bits de poids faible de l'adresse de k bits pour fournir le signal de sélection de mémoire morte lorsque ces x bits indiquent qu'une instruction parmi les (n-1) instructions d'un bloc doit être adressée, et le signal de sélection de mémoire vive lorsque ces bits indiquent que la première instruction d'un bloc doit être adressée ou lorsqu'une zone de correction doit être adressée,

des moyens de commande de décalage (20) qui génèrent un signal de commande de décalage qui est actif lorsque les x bits de poids faible de l'adresse de k bits sont égaux à 0, sauf lorsque la zone de correction de la mémoire vive est adressée, et

des moyens de décalage (30) recevant l'adresse de k bits et générant les bits d'adresse de mémoire à partir de celle-ci, lesdits bits d'adresse de mémoire étant identiques à l'adresse de k bits lorsque le signal de commande de décalage est inactif et étant égaux aux k-x bits de poids fort de l'adresse de k bits lorsque le signal de commande de décalage est actif.

7. Mécanisme de correction suivant la revendication 6, caractérisé en ce que les moyens de décalage comprennent :

des moyens (32,34,36) qui répondent au signal de commande de décalage pour mettre à 0 les x bits de poids fort de l'adresse de mémoire lorsque le signal de commande de décalage est actif.

8. Mécanisme de correction suivant la revendication 4 ou 5, caractérisé en ce que les moyens de sélection répondent aux trois bits de poids faible de l'adresse de code et à au moins un ·des bits de poids fort de l'adresse de code pour générer les signaux de sélection RAM/ROM.

**Ansprüche**

1. Verfahren zum Speichern des Steuercodes eines Prozessors in Speichermitteln, die einen Festspeicher ROM (5) und einen Schreib-Lesespeicher RAM (7) umfassen, dadurch gekennzeichnet, daß das Verfahren im folgenden besteht:

virtuelles Aufteilen des Steuercodes in Blöcke von n aufeinanderfolgenden Befehlen, die einen ersten Befehl und (n-1) nachfolgende Befehle einschließen, wobei n irgendeiner bestimmten ganzen Zahl größer als 2 gleich ist,

Einspeichern des ersten Befehles jedes Blockes in den Schreib-Lesespeicher,

Speichern der (n-1) nachfolgenden Befehle jedes Blockes in dem Festspeicher ROM,

wenn ein Fehler in einem oder mehreren Blöcken erfaßt wird, Ersetzen des ersten Befehles jedes der Blöcke, der üblicherweise in dem Schreib-Lesespeicher RAM gespeichert ist durch einen Verzweigungsbefehl , der einen Verzweigungsadressenwert aufweist, der zu einem Korrekturbereich in dem Schreib-Lesespeicher RAM weist, wo der korrigierte Block gespeichert ist.

2. Verfahren nach Anspruch 1, dadurch gekennzeichnet, daß n gleich einer Potenz von 2 ist.

3. Korrekturmechanismus in einem Prozessorsystem, der Speichermittel mit einem Festspeicher ROM (5) zum Speichern der Befehle des Prozessorsteuercodes aufweist, wobei das System k-Bit-Speicheradressen erzeugt, um die in den Speichermitteln gespeicherten Befehle auf einem Adreßbus (9) zum Adressieren, wo k eine ganze Zahl ist, wobei der Korrekturmechanismus dadurch gekennzeichnet ist, daß er umfaßt:

einen Schreib-Lesespeicher RAM (7) zum Speichern jedes n-ten Befehles des Steuercodes, wo n irgendeiner bestimmten ganzen Zahl größer als 2 gleich ist, auf eine Weise, daß der Steuercode virtuell in Blöcke aufgeteilt ist, die einen ersten in dem Schreib-Lesespeicher RAM gespeicherten Befehl und (n-1) nachfolgende Befehle enthalten, wobei die nachfolgenden Befehle in dem Festspeicher ROM (5) gespeichert sind,

Korrekturbereiche, welche dem Schreib-Lesespeicher RAM beigestellt sind, sodaß wenn ein Fehler in einem oder mehreren Blöcken erfaßt wird, das Prozessorsystem veranlaßt, daß der erste Befehl jedes der Üblicherweise in dem Schreib-Lesespeicher RAM gespeicherten Blöcke durch einen Verzweigungsbefehl ersetzt wird, der einen Verzweigungsadressenwert enthält, der zu einem Korrekturbereich weist, wo das System den korrigierten Block speichern läßt,

eine auf die k-Bit-Adressen ansprechende Adressierungsschaltung (1), die daraus ein Speicherauswahlsignal erzeugt, um die k-Bit-Adresse dem Festspeicher zu liefern, wenn die k-Bit-Adresse der Adresse eines Befehles unter den (n-1) Befehlen eines Blockes entspricht oder dem Schreib-Lesespeicher, wenn die k-Bit-Adresse der Adresse des ersten Befehles eines Blockes oder irgendeiner Adresse in einem Korrekturbereich entspricht.

4.  Korrekturmechanismus nach Anspruch 3, dadurch gekennzeichnet, daß n gleich einer Potenz von 2 zu x ist, das heißt n = $2^x$.

5.  Korrekturmechanismus nach Anspruch 4, dadurch gekennzeichnet, daß die Adressierungsschaltung aufweist:

ein verknüpfendes Mittel (13), das auf die k-Bit-Adresse anspricht und daraus das Speicherauswahlsignal erzeugt, um zu veranlassen, daß entweder der Festspeicher oder der Schreib-Lesespeicher adressiert wird und auch Schreib-Lesespeicheroder Festspeicher-Adressenbits erzeugt, die mit den k-Bits der k-Bit-Adresse identisch sind, wenn das Speicherauswahlsignal aktiv ist, um den Festspeicher zu adressieren, oder wenn die Adresse in einem Korrekturbereich liegt, und die mit den (k-x) höchstwertigen Bits der k-Bit-Adressen identisch sind, wenn das Speicherauswahlsignal aktiv ist, um den Schreib-Lesespeicher zu adressieren.

6.  Korrekturmechanismus nach Anspruch 5, dadurch gekennzeichnet, daß das verknüpfende Mittel aufweist:

Auswahlmittel (50), die zumindest auf die x niederwertigsten Bits der k-Bit-Adresse ansprechen, um das Festspeicher-Auswahlsignal zu erzeugen, wenn diese x Bits anzeigen, daß ein Befehl unter den n-1 Befehlen eines Blockes adressiert werden soll und das Schreib-Lesespeicher-Auswahlsignal zu erzeugen, wenn diese Bits anzeigen, daß der erste Befehl eines Blockes adressiert werden soll oder wenn ein Korrekturbereich des Schreib-Lesespeichers adressiert werden soll,

ein Schiebesteuermittel (20), das ein Schiebesteuersignal erzeugt, das aktiv ist, wenn die x niederwertigsten Bits der k-Bit-Adresse gleich 0 sind, ausgenommen, wenn der Korrekturbereich des Schreib-Lesespeichers adressiert wird,

ein Schiebemittel (30), welches die k-Bit-Adresse empfängt und daraus die Speicheradressenbits erzeugt, wobei die Speicheradressenbits mit der k-Bits-Adresse identisch sind, wenn das Schiebesteuersignal inaktiv ist und den k-x höchstwertigen Bits der k-Bit-Adresse gleich sind, wenn das Schiebesteuersignal aktiv ist.

7.  Korrekturmechanismus nach Anspruch 6, dadurch gekennzeichnet, daß das Schiebemittel aufweist:

Mittel (32, 34, 36), die auf das Schiebesteuersignal zum Setzen der x höchstwertigen Bits der Speicheradresse auf 0 ansprechen, wenn das Schiebesteuersignal aktiv ist.

8.  Korrekturmechanismus nach Anspruch 4 oder 5, dadurch gekennzeichnet, daß die Auswahlmittel auf die drei niederwertigsten Bits der Codeadresse und auf zumindest eines der höchstwertigen Bits der Codeadresse zum Erzeugen der RAM/ROM-Auswahlsignale ansprechen.

FIG. 1

FIG. 2